# EUROPEAN PATENT APPLICATION

(11) **EP 4 768 999 A1**
(43) Date of publication of application: **01.07.2026**
(21) Application number: 25206604.8
(22) Date of filing: 03.10.2025
(51) Int. Cl.: G02B 6/44

(54) **TELECOMMUNICATIONS FRAME AND BREAKOUT CLOSURE**

(30) Priority: 31.12.2024 CN 202411999329
(71) Applicant: AFL Telecommunications LLC, Duncan, SC 29334 (US)
(72) Inventor: QIU, Menglong, Shenzhen (CN); WONG, Kai, 118523 Singapore (SG); SOONG, Jin Xian, 118523 Singapore (SG)
(74) Representative: Serjeants LLP

(57) **Abstract**

A cable breakout closure includes a body (310) having first and second end openings (302, 304). Sidewalls (318) of the body (310) include a channel (325) extending substantially co-directional to a direction of extension of the sidewalls (318). A fiber guide module includes fiber guide arms (342) positioned proximate to the first end opening (302). The fiber guide arms (342) form a fiber guide channel (344) extending substantially co-directional to a direction of separation of the first end opening (302) from the second end opening (304). A cable mount module (350) includes a cable routing passage extending from the second end opening (304) to an interior volume (308) of the body (310). A cap (360) is attachable to the cable mount module (350) and forms a cover over the cable routing passage. A cover (320) includes a cover wall (322) and a guide rail (324) receivable at the channel (325). The body (310) includes a springing mechanism (313) configured to apply a force to the cover wall (322) to retain the cover (320) within the channel (325).

## Description

### FIELD

The present disclosure relates generally to structures for telecommunications cables and equipment holders, and more particularly, to breakout closures.

### BACKGROUND

Optical fiber breakout boxes and associated accessories, such as tubing for fiber optic bundles, are used for separating and grouping fiber from larger cables into manageable bundles for splice trays and panels, such as may typically be used in a large splice frame. Known frames and breakout boxes are cumbersome and may remove from simple, efficient, or manufacturable solutions.

Known breakout boxes may include latches that are too stiff for a cover to be opened easily and accessibly for working on the cable and fibers inside the box. Additionally, requiring tools for opening, closing, locking, or attaching a cover or a box may lead to inefficiencies or damage.

Accordingly, improved structures that facilitate improved optical network deployment and/or address one or more above identified issues are desired in the art and would be advantageous.

### BRIEF DESCRIPTION

Aspects and advantages of the invention will be set forth in part in the following description, may be apparent from the description, or may be learned through practice of the invention.

An aspect of the present disclosure is directed to a cable breakout closure including a body having a first end opening, a second end opening distal to the first end opening, and an interior volume formed between the first end opening and the second end opening. The body includes a pair of sidewalls separated from one another and a base wall extending to the sidewalls. The sidewalls include a channel extending substantially co-directional to a direction of extension of the sidewalls. A fiber guide module includes a plurality of fiber guide arms, the fiber guide module positioned proximate to the first end opening. The fiber guide arms form a fiber guide channel extending substantially co-directional to a direction of separation of the first end opening from the second end opening. A cable mount module including a cable routing passage extends from the second end opening to the interior volume. A cap is attachable to the cable mount module and forming a cover over the cable routing passage. A cover includes a cover wall and a guide rail. The guide rail is receivable at the channel at the body. The body includes a springing mechanism configured to apply a force to the cover wall to retain the cover within the channel at the body.

The springing mechanism may include a spring plunger positioned at a top wall at the body. The spring plunger may be configured to apply the force to a face of the cover wall at which the cover abuts the body.

The cover may include a fastener forming a captive screw configured to be received at a fastener interface at a top wall of the body.

The channel at the body may include a detent at the first end opening and an open end at the second end opening. The open end may be configured to receive the guide rail at the cover along the direction of extension of the sidewalls.

The cable mount module may include an attachment surface configured to retain a cable at the cable mount module.

The attachment surface may include bumps, protrusions, or spikes configured to grip onto the cable at the cable routing passage.

The attachment surface may include rows of bumps, protrusions, or spikes positioned in adjacent arrangement along a direction of extension of the cable routing passage from the second end opening to the interior volume.

The cable mount module may include a groove extending from a platform wall. The cable routing passage may extend along the groove from the second end opening toward the interior volume.

The body may include a unitary, monolithic component comprising the sidewalls, the base wall, and the top wall.

The body may include a unitary, monolithic component comprising a polymer material or a metallic material.

The body may include a sheet metal material comprising the sidewalls, the base wall, and the top wall. A fastener interface may extend through the sidewalls to receive a fastener to attach the fiber guide module at the first end opening. The base wall may include a fastener interface to attach the cable mount module at the second end opening.

Another aspect of the present disclosure is directed to a cable breakout closure including a body having a first end opening, a second end opening distal to the first end opening, and an interior volume formed between the first end opening and the second end opening. The body has a pair of sidewalls separated from one another and a base wall extending to the sidewalls. A fiber guide module includes a plurality of fiber guide arms. The fiber guide module is positioned proximate to the first end opening. The fiber guide arms form a fiber guide channel extending substantially co-directional to a direction of separation of the first end opening from the second end opening. A cable mount module includes a cable routing passage extending from the second end opening to the interior volume. A cap is attachable to the cable mount module and forming a cover over the cable routing passage. A cover includes a cover wall and a guide rail. The guide rail comprises a rail channel configured to receive an attachment interface forming a pin attached to the sidewall.

A fastener interface may extend through the sidewall to receive a fastener to attach the fiber guide module at the first end opening.

The cover may include a fastener forming a captive screw configured to be received at a fastener interface at a top wall of the body.

Other features of the cable breakout closure may be as described above. For example, the cable mount module may comprise an attachment surface as described above ad configured to retain a cable at the cable mount module, e.g., where the attachment surface comprises bumps, protrusions or spikes configured to grip oto the cable at the cable routing passage. The body may also comprise a unitary, monolithic component being a polymer material or metallic material. The body may be sheet metal material, for example.

An aspect of the present disclosure is directed to an apparatus for telecommunications equipment mounting. The apparatus includes a frame having a pair or more of exterior sidewalls and a pair or more of interior sidewalls. A first volume is formed between the exterior sidewall and the interior sidewall. A second volume is formed between the interior sidewall and a base wall extending between the pair of interior sidewalls. A routing opening extends through the interior sidewalls to permit routing through the first volume to the second volume. A top wall is positioned atop the frame. The top wall includes a cable entry opening permitting routing to the first volume. The top wall includes a cable egress opening permitting routing from an opposing first volume. A cable breakout closure is disposable at a closure mount location at the first volume. The cable breakout closure includes a body having a first end opening, a second end opening distal to the first end opening, and an interior volume formed between the first end opening and the second end opening. The body includes a pair of sidewalls separated from one another and a base wall extending to the sidewalls. The sidewalls include a channel extending substantially co-directional to a direction of extension of the sidewalls. A fiber guide module includes a plurality of fiber guide arms. The fiber guide module is positioned proximate to the first end opening. The fiber guide arms form a fiber guide channel extending substantially co-directional to a direction of separation of the first end opening from the second end opening. A cable mount module includes a cable routing passage extending from the second end opening to the interior volume. A cap is attachable to the cable mount module and forms a cover over the cable routing passage. A cover includes a cover wall and a guide rail. The guide rail is receivable at the channel at the body. The body includes a springing mechanism configured to apply a force to the cover wall to retain the cover within the channel at the body.

Other features of the cable breakout closure may be as described above.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 illustrates a perspective view from a front end of an exemplary telecommunications equipment mounting frame in accordance with aspects of the present disclosure;
FIG. 2 illustrates a front view of the exemplary telecommunications equipment mounting frame of FIG. 1 in accordance with aspects of the present disclosure;
FIG. 3 illustrates a front view of the exemplary telecommunications equipment mounting frame of FIG. 1, including an exemplary routing of cables and fibers and positioning of cable breakout closure and cassettes, in accordance with aspects of the present disclosure;
FIG. 4 illustrates a perspective view from the front end of the exemplary telecommunications equipment mounting frame of FIG. 1, with doors open, in accordance with aspects of the present disclosure;
FIG. 5 illustrates a perspective view from the front end of the exemplary telecommunications equipment mounting frame of FIG. 1, with doors open and depicting exemplary cable breakout closures and cassettes, in accordance with aspects of the present disclosure;
FIG. 6 illustrates a detailed perspective view of the exemplary telecommunications equipment mounting frame of FIG. 2 in accordance with aspects of the present disclosure;
FIG. 7 illustrates a perspective view from a rear end of the exemplary telecommunications equipment mounting frame of FIG. 1 in accordance with aspects of the present disclosure;
FIG. 8 illustrates a perspective view from a first end of an exemplary cable breakout closure in accordance with aspects of the present disclosure;
FIG. 9 illustrates a perspective view from the first end of the exemplary cable breakout closure of FIG. 8, with a cover removed, in accordance with aspects of the present disclosure;
FIG. 10 illustrates a perspective view from the first end of a body of the exemplary cable breakout closure of FIG. 8 in accordance with aspects of the present disclosure;
FIG. 11 illustrates a perspective view from a rear end of the exemplary cable breakout closure of FIG. 8 in accordance with aspects of the present disclosure;
FIG. 12A illustrates a perspective view from a first end of an exemplary cable breakout closure in accordance with aspects of the present disclosure;
FIG. 12B illustrates a perspective view from a first end of an exemplary cable breakout closure in accordance with aspects of the present disclosure;
FIG. 13 illustrates a perspective view from the first end of the exemplary cable breakout closure of FIG. 12A, with a cover removed, in accordance with aspects of the present disclosure;
FIG. 14 illustrates a perspective exploded view from the first end of a body of an exemplary cable breakout closure in accordance with aspects of the present disclosure;
FIG. 15 illustrates a perspective view from the first end of a body of the exemplary cable breakout closure of FIG. 14 in accordance with aspects of the present disclosure;
FIG. 16 illustrates a perspective view from the first end of a body of the exemplary cable breakout closure of FIG. 14 in accordance with aspects of the present disclosure;
FIG. 17 illustrates a perspective view from a second end of the exemplary cable breakout closure of FIG. 14 in accordance with aspects of the present disclosure;
FIG. 18 illustrates a top plane view of the exemplary cable breakout closure, with the cover transparent, in accordance with aspects of the present disclosure;
FIG. 19 illustrates a perspective view from a back side of the exemplary cable breakout closure in accordance with aspects of the present disclosure; and
FIG. 20 illustrates a perspective view of an exemplary cable breakout closure, with portions removed for clarity, depicting cables/fibers/sleevings positioned thereat in accordance with aspects of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first," "second," and "third" may be used interchangeably to distinguish one component from another and are not intended to signify location or importance of the individual components. The terms "includes" and "including" are intended to be inclusive in a manner similar to the term "comprising." Similarly, the term "or" is generally intended to be inclusive (i.e., "A or B" is intended to mean "A or B or both"). In addition, here and throughout the specification and claims, range limitations may be combined and/or interchanged. Such ranges are identified and include all the sub-ranges contained therein unless context or language indicates otherwise. For example, all ranges disclosed herein are inclusive of the endpoints, and the endpoints are independently combinable with each other. The singular forms "a," "an," and "the" include plural references unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "generally," "about," "approximately," and "substantially," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin, i.e., including values within ten percent greater or less than the stated value. In this regard, for example, when used in the context of an angle or direction, such terms include within ten degrees greater or less than the stated angle or direction, e.g., "generally vertical" includes forming an angle of up to ten degrees in any direction, e.g., clockwise or counterclockwise, with the vertical direction V.

The word "exemplary" is used herein to mean "serving as an example, instance, or illustration." In addition, references to "an embodiment" or "one embodiment" does not necessarily refer to the same embodiment, although it may. Any implementation described herein as "exemplary" or "an embodiment" is not necessarily to be construed as preferred or advantageous over other implementations. Moreover, each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the term "rack unit" (RU) is understood by those skilled in the art as a unit of measure of approximately 1.75 inches (in) or approximately 44.45 millimeters (mm), or up to 0.03125 in or 0.794 mm less when applied to telecommunications equipment attached to a mount structure.

Dimensions provided herein may include approximations of +/-2% of any discrete quantity, or approximations of +2% of a maximum value over a given range or -2% of the maximum value under the given range, unless otherwise provided herein.

Embodiments of a telecommunication equipment mounting apparatus and cable breakout closure are depicted and described herein that address one or more of the aforementioned issues.

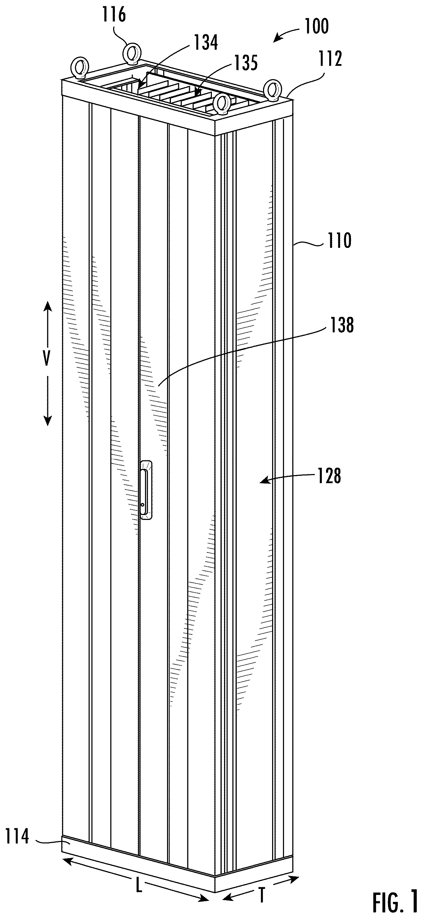

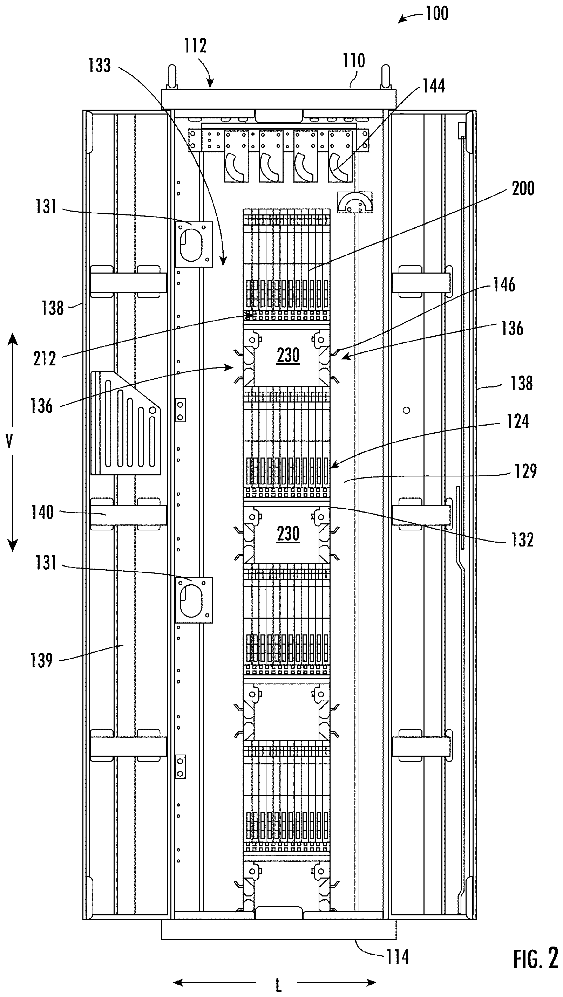

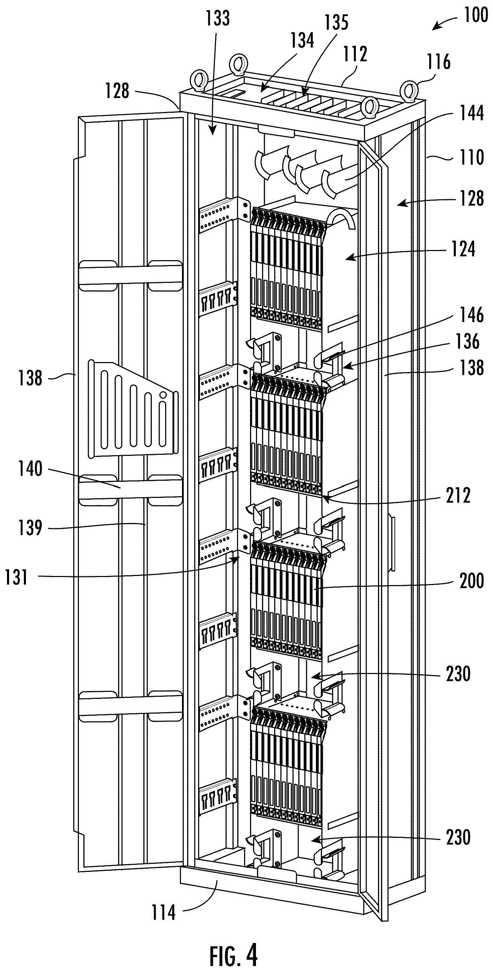

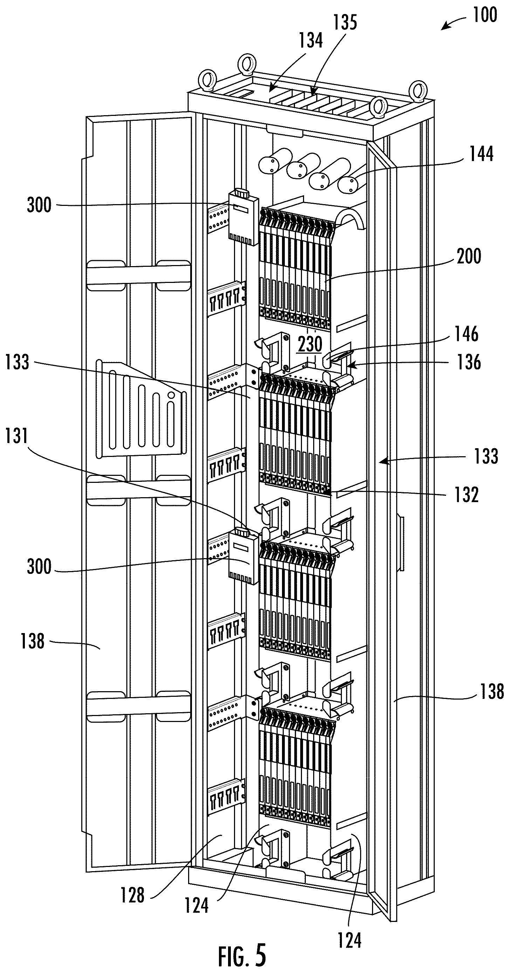

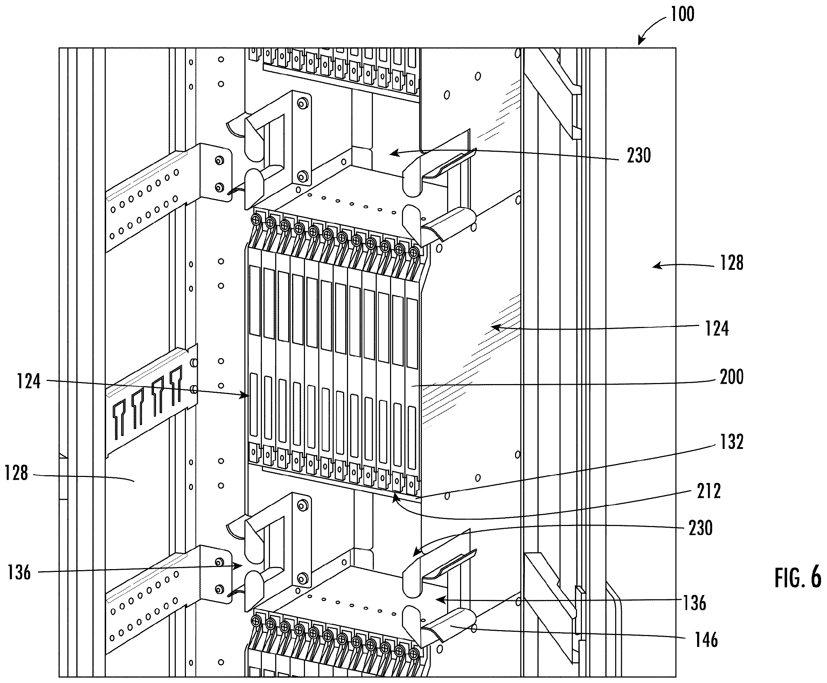

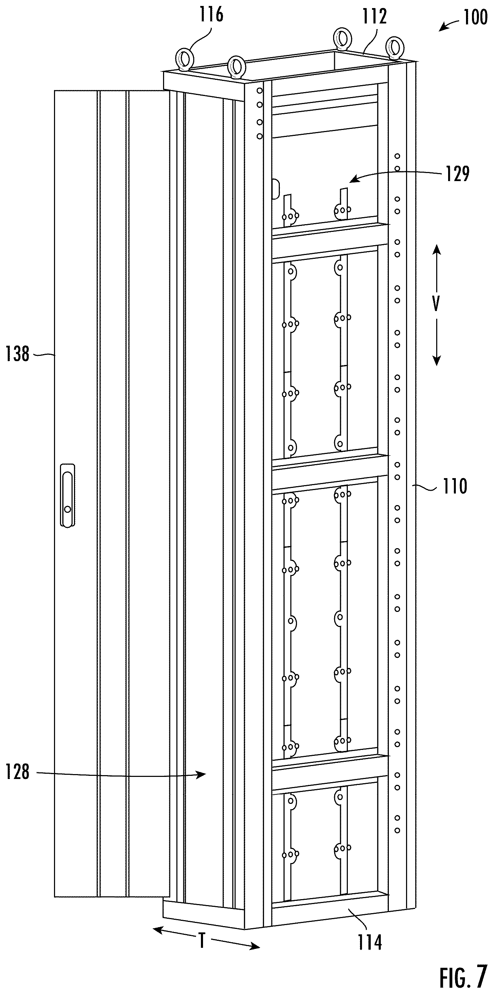

FIGS. 1-7 provide views of an exemplary embodiment of a telecommunications equipment mounting apparatus 100 in accordance with aspects of the present disclosure. Apparatus 100 includes a frame 110 having sidewalls 128 separated from one another and forming an interior volume 133 therebetween. A rear wall 129 may extend between and connecting the sidewalls 128. One or more doors 138 attach to the frame 110 to permit selective access and concealing of the interior volume 133 of the frame 110. Sidewalls 128, or additionally, the rear wall 129, extend from a base wall 114. A top wall 112 is positioned at the top of the sidewalls 128, or additionally, the rear wall 129.

In various embodiments, apparatus 100 includes internal sidewalls 124 extending substantially co-directional to exterior sidewalls 128. A plurality of internal base walls 132 extend substantially co-directional to the exterior base wall 114. The internal base walls 132 extend between internal sidewalls 124 to form volumes therebetween. Between base walls 132 along the vertical direction V a routing volume 230 is formed. Between routing volumes 230 patch trays or cassettes 200 are positioned in arrays extending substantially along the longitudinal direction L.

Cassettes 200 may extend substantially along the vertical direction V and position in adjacent arrangement to one another along the longitudinal direction L. For instance, an ingress/egress opening 212 is positioned at a lower and upper end of the cassette 200 (e.g., proximate to the base wall 132) proximate to the base wall 132 along the vertical direction V and proximate to the routing volume 230 from and to which optical fibers route.

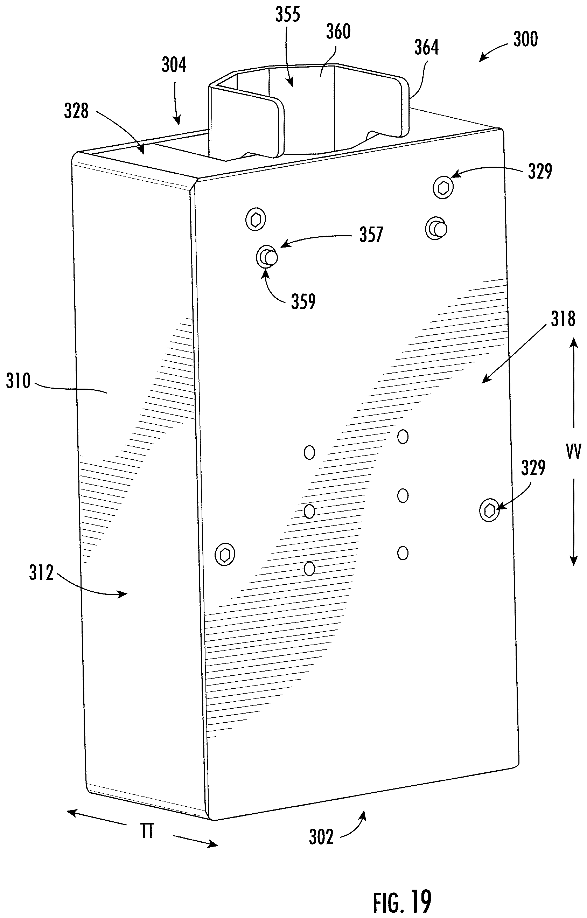

A fiber optic cable 91 is configured to receive at the apparatus 100 at a cable entry opening 134, such as positioned at the top wall 112. As further described herein, a cable breakout closure 300 may be positioned (e.g., hung, mounted, wrapped, or otherwise fastened) to the frame 110, such as at a hanger or mount location 144. One or more cables 91 may extend into frame 110 through the entry opening 134. Embodiments of the closure 300 are positioned at a volume at the frame 110, such as at a first volume 133 formed between sidewalls 128, or between exterior sidewall 128 and interior sidewall 124. A closure mount location 131 at the apparatus 100 includes a wall and fastener openings or strap locations to receive the closure 300 at the first volume 133. For instance, referring briefly to FIG. 19, closure 300 may include a fastener interface 329 at a body 310 and configured to attach at or correspond to the closure mount location 131. As further described herein, cable 91 ingresses into the closure 300, such as through a second end opening 304 further described herein. Fibers 93 breakout from cable 91, such as extending from a first end opening 302 at the closure 300, and extend through a routing opening 136 from first volume 133 (e.g., volume 133A) to a second volume 230 to enter into and operably couple at one or more cassettes 200. Spliced fibers 94 egress from the cassette 200 into the second volume 230 (e.g., the same second volume 230 from which fibers 93 entered into cassette 200) and egress into an opposing first volume 133 (e.g., volume 133B). Fibers 94 are permitted to egress from the opposing first volume 133B and exit the frame 110 at a cable egress opening 135, such as positioned through the top wall 112 and adjacent to the cable entry opening 134.

Referring to FIGS. 1-7, in various embodiments, door 138 may include a first rib 139 extending substantially along the vertical direction V. Door 138 may include a second rib 140 extending substantially perpendicular to the vertical direction V. One or both ribs 139, 140 may strengthen the door. For instance, strengthening the door 138 may facilitate holding documents, installation guides, or accessories at holder 150 at the door 138.

Internal sidewalls 124 may include a routing opening 136 through which fibers are permitted to route from a first volume 133 to a second volume 230 proximate to the ingress/egress opening 212 at the cassette 200. A cable guide interface 146 may be formed along a perimeter of the opening 136, such as to provide a lip, contour, or curve to protect fibers from breaking, such as by permitting bending the fibers at a desired radius.

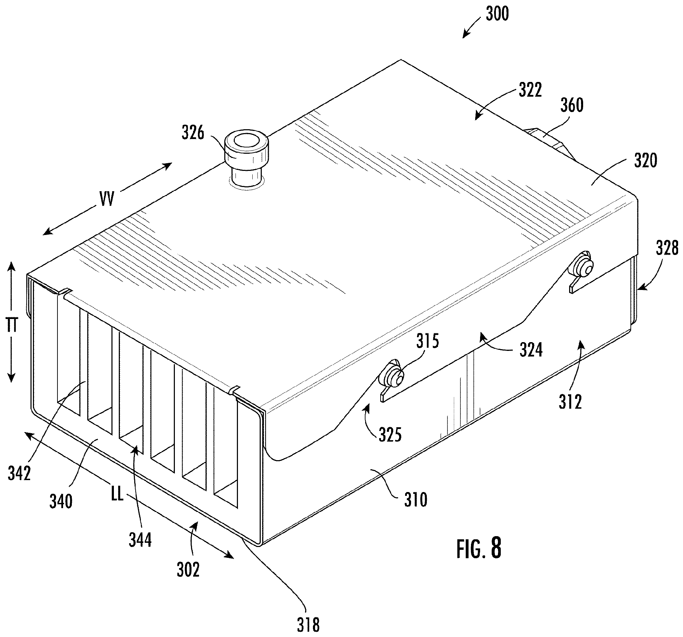

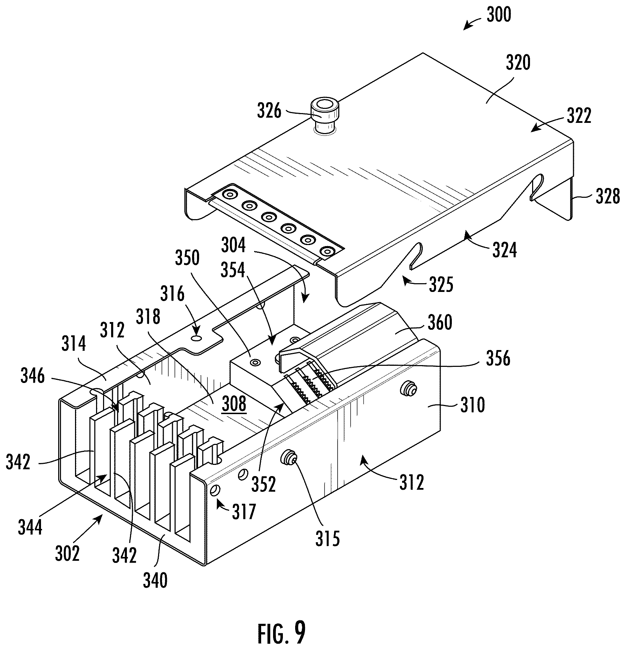

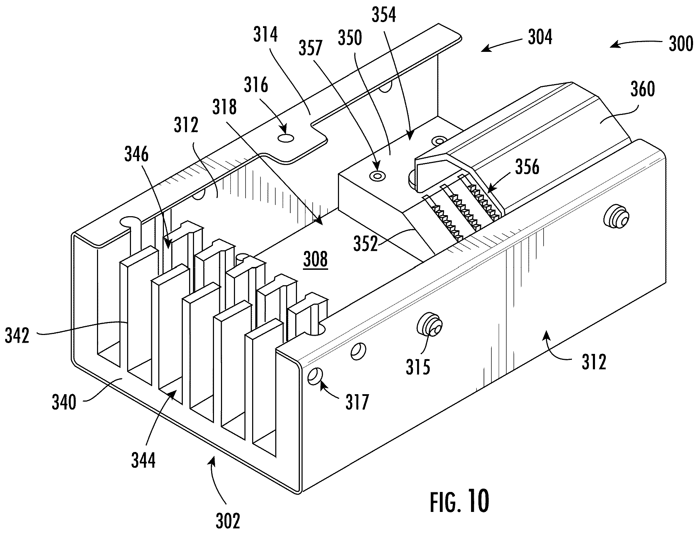

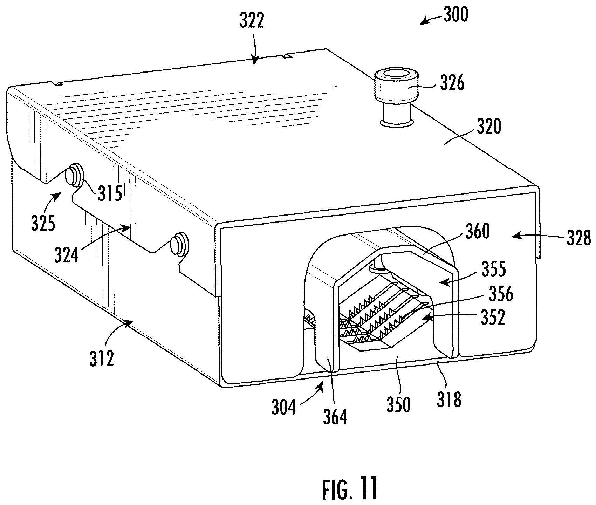

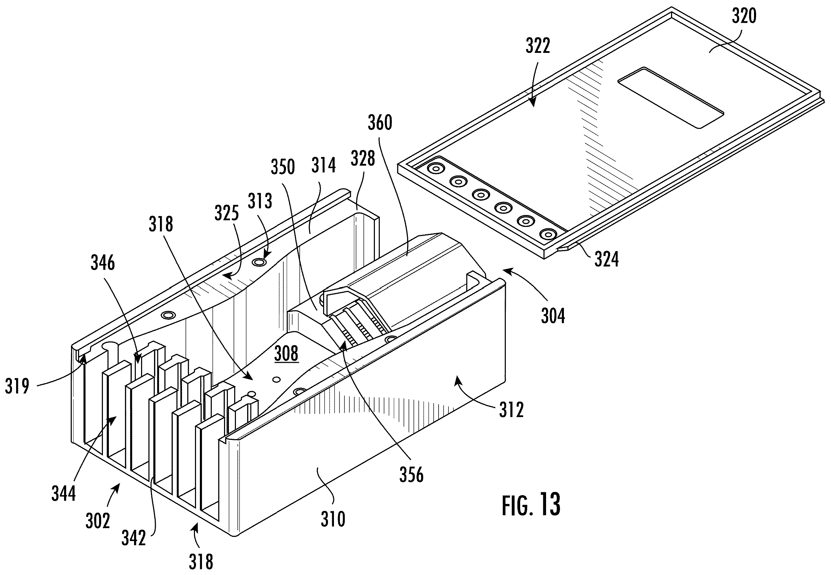

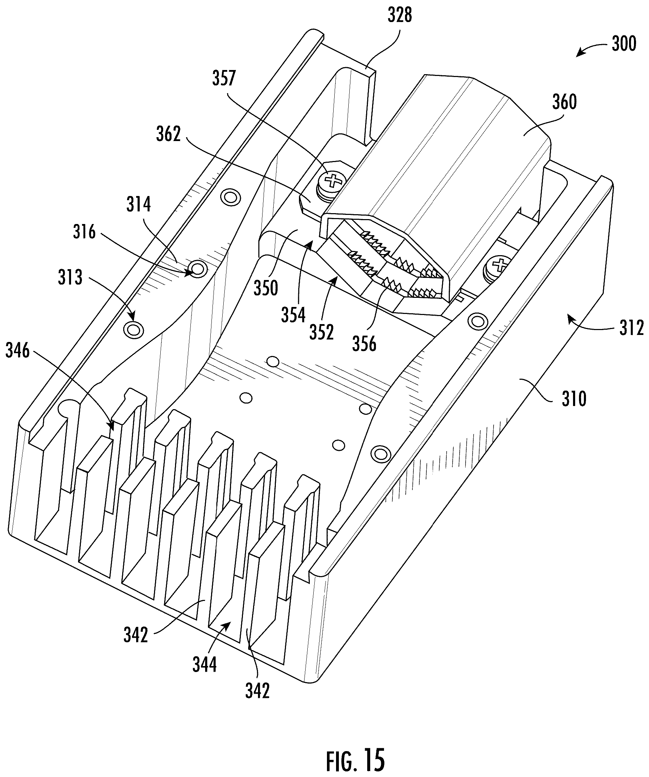

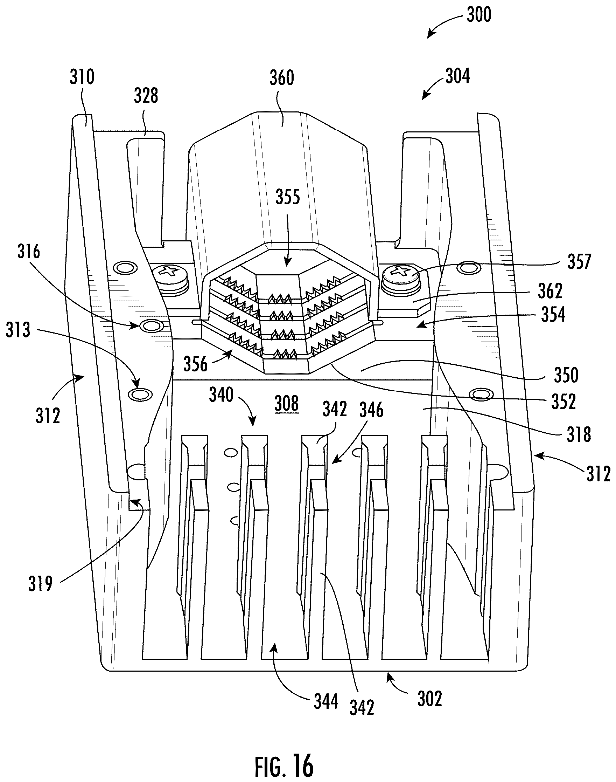

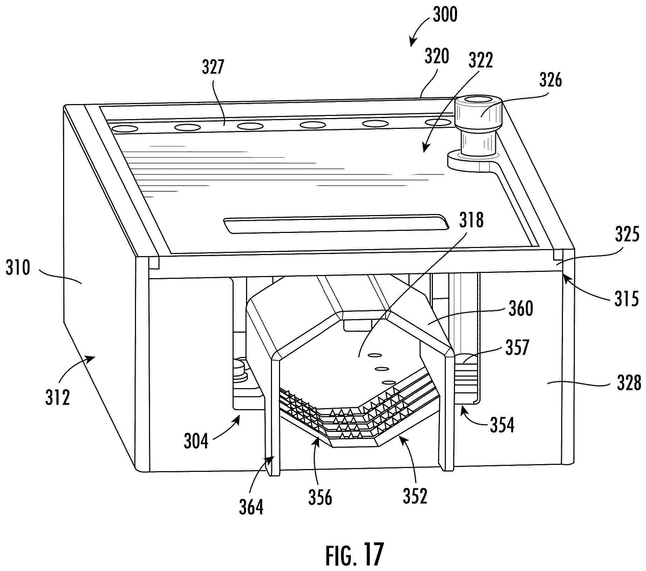

FIGS. 8-20 provide views of embodiments of a cable breakout closure 300 in accordance with aspects of the present disclosure. The closure 300 includes a body 310 forming a first end opening 302, a second end opening 304, and an interior volume 308 between the openings 302, 304. A selectively removable cover 320 extends between the openings 302, 304 to provide selective access to the interior volume 308. Openings 302, 304 provide openings through which cables, fiber optic leads, or other transmission elements extend into and out of the interior volume 308 of the closure 300.

The body 310 includes a pair or more of sidewalls 312 separated from one another and a base wall 318 extending to the sidewalls 312. The cover 320 includes a front wall 322 extending substantially co-directionally to the base wall 318. Sidewalls 312 extend from the base wall 318 and provide a surface at which the cover 320 is removably disposable. The interior volume 308 extends between the sidewalls 312 and base wall 318 at the body 310, or furthermore, between the base wall 318 at the body 310 and the cover wall 322 at the cover 320.

A fiber guide arm 342 is positioned at the body 310 at or proximate to the first end opening 302. The fiber guide arm 342 forms a wall extending substantially co-directionally to the sidewall 312 to form a fiber guide channel 344 extending co-directionally to the sidewall 312. In various embodiments, the fiber guide channel 344 is positioned between the fiber guide arm 342 and the sidewall 312, or between a pair of fiber guide arms 342. The fiber guide channel 344 extends substantially from the interior volume 308 to the first open end 302, such as to provide an affixing, mounting, or securing structure at which fiber optic leads may attach to the body 310 as the leads route between the interior volume 308 and through the first open end 302 to external of the closure 300. In various embodiments, a fiber guide module 340 is formed from the fiber guide arm 342, or plurality thereof, positioned at or proximate to the first end opening 302.

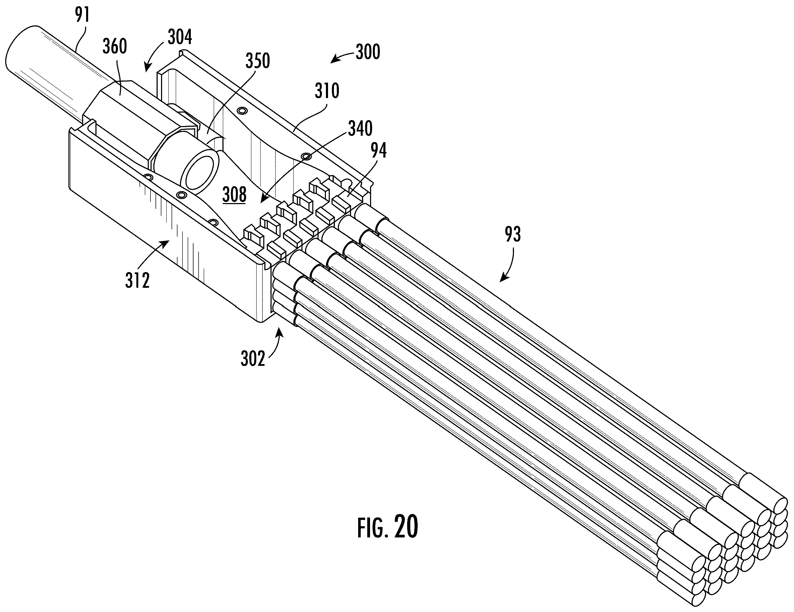

In some embodiments, the fiber guide arm 342 may include an indent, channel, or gap 346 extended into the fiber guide arm 342, or between a pair of fiber guide arms 342 in adjacent arrangement along the substantial direction of extension of the fiber guide arm 342 (e.g., a pair of fiber guide arms 342 in adjacent arrangement along a substantial direction of extension of the sidewall 312). The gap 346 provides an opening or passage between a pair of channels 344, such as may permit a connector, or tab or wing 94 thereof (FIG. 20) at the fibers, to retain within the gap 346 and retain the fibers from movement along the vertical direction VV. In various embodiments, the gap 346 extends perpendicular to, or at an acute angle relative to, the channel 344.

A cable mount module 350 is positioned at the body 310 at or proximate to the second end opening 304. The cable mount module 350 forms a cable routing passage 355 extending from the interior volume 308 to the second open end 304. The cable mount module 350 forms a surface at which a fiber optic cable is received through the second end opening 304. In various embodiments, the cable mount module 350 includes a nadir, concave wall, or groove 352 configured to receive the cable at the cable routing passage 355. The groove 352 may extend from a platform wall 354. For instance, the platform wall 354 may form a raised wall extending, at least in part, co-directionally to the base wall 318. The groove 352 extends from the platform wall 354 toward the base wall 318 to form a cradle at which the cable is received at the cable routing passage 355.

In some embodiments, an attachment surface 356 is formed at the groove 352. The attachment surface 356 includes bumps, protrusions, spikes, etc. configured to attach or grip onto a cable at the cable routing passage 355. For instance, the attachment surface 356 may provide bumps, protrusions, spikes, etc. to bite or hook into the cable jacket of the cable to limit or inhibit movement of the cable positioned at the cable routing passage 355. In still some embodiments, the attachment surface 356 includes a plurality of bumps, protrusions, spikes, etc. extending substantially along the groove 352, such as along a direction of extension of the cable routing passage 355 from the second end opening 304 to the interior volume 308. The attachment surface 356 may include rows of bumps, protrusions, spikes, etc. positioned in adjacent arrangement along a direction of extension of the cable routing passage 355 from the second end opening 304 to the interior volume 308.

In still some embodiments, the closure 300 includes a cap 360 configured to extend over the cable routing passage 355, such as to extend over a cable extending through the cable routing passage 355. The cap 360 may include a tab 362 configured to receive a fastener 357 at a fastener interface 359. The fastener interface 359 is configured to extend into the cable mount module 350, such as at the platform wall 354, to connect the cap 360 to the cable mount module 350. Fastener interface 359 may further form an interface at which the fastener 357 is received to extend into the body 310, such as into the base wall 318, to selectively attach, or remove, the cable mount module 350 to the body 310.

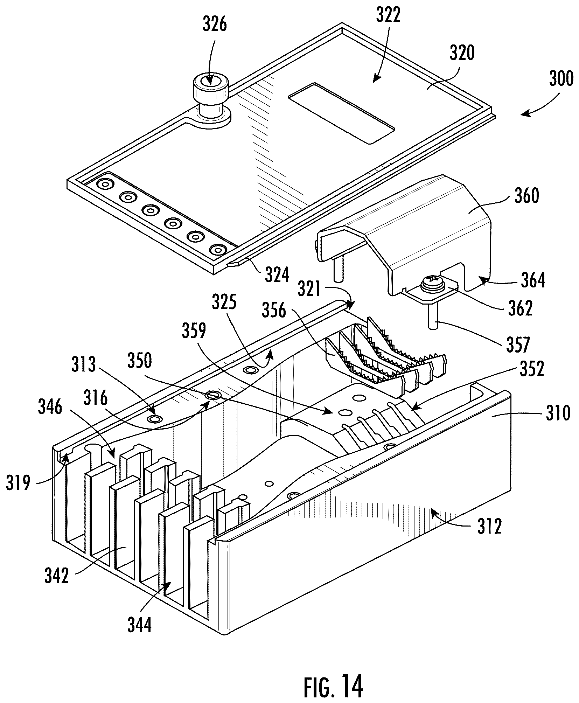

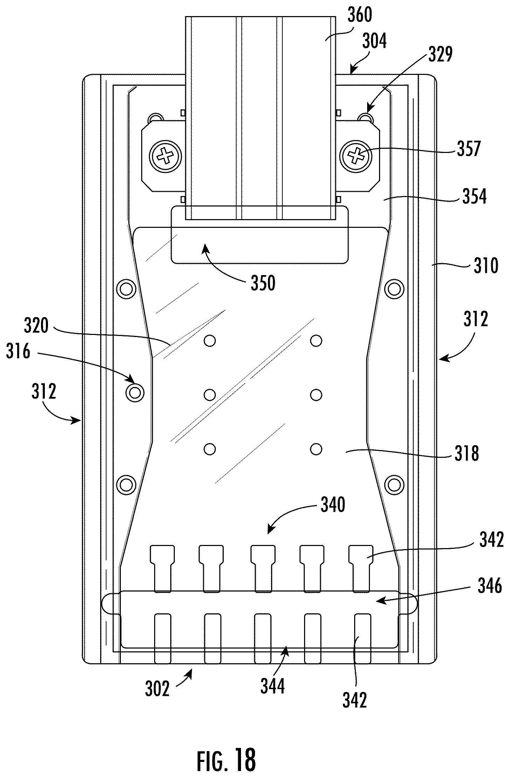

As more clearly depicted in FIG. 14 and FIG. 18, in some embodiments, cap 360 includes a tab 364 extending outside of the body 310 and forming a detent along the vertical direction VV, such as may limit movement of the cap 360 along the vertical direction VV from the second end opening 304 toward the first end opening 302.

In various embodiments, a second end wall 328 partially obscures the second end opening 304. The second end wall 328 may be formed with the cover 320, such as extending from the cover wall 322 to selectively obscure and reveal the second end opening 304 around the cap 360. In some embodiments, the second end wall 328 is attached to or formed integrally with the base wall 318, sidewalls 312, or both. For instance, the second end wall 328 may extend from sidewalls 312 toward one another to obscure the second end opening 304 around the cap 360. Accordingly, second end opening 304 may form an open end substantially corresponding to the cable routing passage 355.

Referring to FIGS. 8-20, in various embodiments, the cover 320 includes a guide rail 324 configured to be received at an attachment interface 315 at the body 310. Referring to FIGS. 8-11, the body 310 includes the attachment interface 315 forming a pin configured to receive the guide rail 324 at a rail channel 325 formed into the guide rail 324. The attachment interface 315 forming the pin may extend into sidewall 312. The channel 325 may extend at an acute angle between a vertical direction VV and transverse direction TT, or substantially along the transverse direction TT, or a curved or tortious path between the vertical direction VV and transverse direction TT. For instance, the channel 325 may extend such as to permit the cover 320 to position atop the sidewalls 312, such as at a lip or top wall 314 distal to the base wall 318, when the closure 300 is positioned extending substantially along the vertical direction VV (i.e., positioned such that sidewalls 312 extend substantially along a vertical direction V of frame 100).

Referring to FIG. 14, cover 320 may include a fastener 326, such as may form a captive screw facilitating articulation of the cover 320. In various embodiments, body 310 includes a fastener interface 316 configured to receive the fastener 326 at the cover 320. The fastener interface 316 may be formed at the top wall 314 extending co-directional to the base wall 318, such as to provide an interface at which the cover 320 may selectively lock or couple onto the body 310. In various embodiments, the fastener interface 316 includes a thread configured to receive a thread at the fastener 326, such as may permit selective fastening or locking of the cover 320 to the body 310.

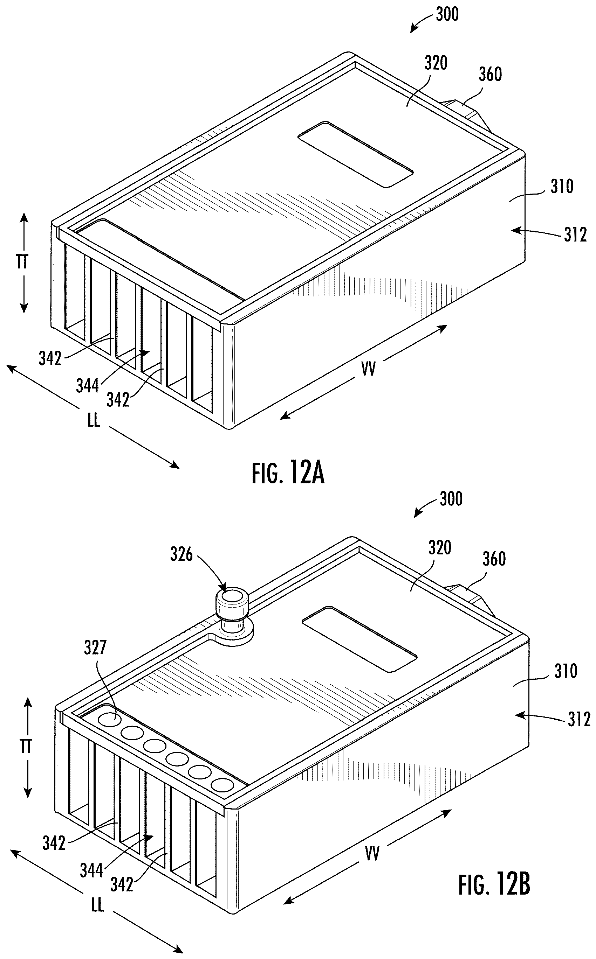

In some embodiments, such as depicted at FIG. 12B, the cover 320 may include portions at which a label is received, such as at label 327. The label 327 may provide visual instruction, labeling, naming, or identification relative to fibers extending through channels 344 at the first end opening 302.

Referring to FIGS. 12A-12B through FIG. 20, in various embodiments, the body 310 includes an attachment interface 313 forming a springing mechanism, such as a spring plunger, configured to exert a force onto the cover 320. In various embodiments, the attachment interface 313 includes a spring plunger configured to exert a force onto a face of the cover wall 322 at which the cover 320 abuts the body 310. The guide rail 324 at the cover 320 is positioned in the attachment interface 315 forming a channel at the body 310. The force exerted from the attachment interface 313 forming the spring plunger generates friction that may retain the cover 320 to the body 310.

Body 310 may include a fastener interface 317 extending into sidewall 312. The fastener interface 317 is positioned proximate to the first end opening 302 to form an interface at which the fiber guide module 340 may be selectively attached or to, or removed from, the body 310. The fastener interface 317 may form pins, threaded shanks, or members extending into the fiber guide module 340 to attach the fiber guide module 340 to the body 310.

Referring to FIGS. 12A-12B through FIG. 20, in various embodiments, the body 310 includes the rail channel 325 forming a passage or channel configured to receive the guide rail 324 at the cover 320. The guide rail 324 may extend substantially co-directional to an extension of the sidewalls 312. For instance, the rail channel 325 forming a channel may extend substantially along the vertical direction VV, and the guide rail 324 at the cover 320 extends substantially along vertical direction VV (relative to the cover 320 attached to the body 310), such as may permit receiving the guide rail 324 into the rail channel 325 from the second end opening 304. The body 310 may form a stop or detent 319 at the rail channel 325 at or proximate to the first end opening 302, such as to inhibit the cover 320 from sliding through the rail channel 325 through the first end opening 302 along the vertical direction VV. The body 310 may form an open end 321 at the rail channel 325 at the second end opening 304, such as to permit entry of the guide rail 324 to slide along the vertical direction VV into the rail channel 325 and stop at the detent 319 at the first end opening 302.

In some embodiments, the closure 300 is formed from sheet metal and one or more forming processes for sheet metal. For instance, FIGS. 8-11 may depict an embodiment of the closure 300 having body 310 formed from sheet metal. The fiber guide module 340 may be formed of any appropriate material (e.g., a polymer material) and selectively attached to, or removed from, the sheet metal body 310, such as at fastener interface 317. The cable mount module 350 may be formed of any appropriate material (e.g., a polymer material) and selectively attached to, or removed from, the sheet metal body 310, such as at fastener interface 359.

In still some embodiments, the closure 300 is formed from a polymer material or other appropriate material. The body 310 may include a unitary, monolithic component including the fiber guide arm 342 and the cable mount module 350. The body 310 may be formed of any appropriate material (e.g., a polymer material) and configured to selectively receive the cap 360.

In various embodiments, the cover 320 is formed of any appropriate material, such as, but not limited to, a metal, polymer, rubber, or combinations thereof. The cover 320 may be formed as a unitary, monolithic component, selectively attachable to the body 310, such as described regarding various embodiments herein.

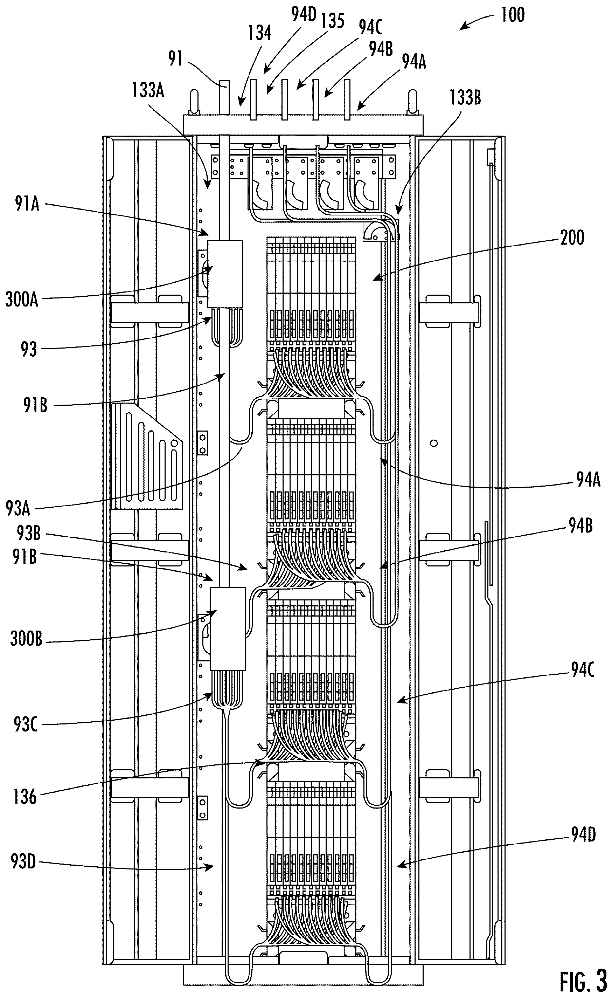

Referring to FIG. 20, an exemplary embodiment of the closure 300 depicting an input cable 91 and a plurality of output fibers 93 is depicted. Cable 91 extends into the body 310 through second end opening 304 and is received at the cable mount module 350. Attachment surface 356 may attach to an outer portion of the cable 91, such as an outer jacket, sleeve, or sheath, to promote retention of the cable 91 at the cable mount module 350 at the cable routing passage 355. Cap 360 is positioned around the cable 91 and attached to the cable mount module 350, such as to provide a detent limiting movement of the cable 91 along the transverse direction TT. Fibers (not depicted) are permitted to breakout at the interior volume 308 and egress from the body 310 through the first end opening 302. Fibers 93 may include connectors 94 received at the fiber guide module 340. For instance, gap 346 may receive a tab or wing at the connectors 94, such as may retain the cable between fiber guide arms 342 and at channel 344. Fibers 93 are permitted to egress and operably coupled to cassettes 200 at the apparatus 100, such as depicted at FIG. 3.

Referring back to FIG. 3, in an exemplary embodiment of cable and fiber routing at the apparatus 100, first and second input cables 91A, 91B are received at the apparatus 100 through cable entry opening 134. Cables 91A, 91B are received at respective closures 300A, 300B, such as separated along the vertical direction V. Breakout fibers 93A, 93B extend from closure 300A and input cable 91A. Breakout fibers 93C, 93D extend from closure 300B and input cable 91B. Respective bunches of fibers 93A, 93B, 93C, 93D are permitted to ingress to respective volumes 230 through respective routing openings 136 to respective arrays of cassettes 200. Respective arrays out spliced output fibers 94A, 94B, 94C, 94D extend from cassettes 200 receiving respective fibers 93A, 93B, 93C, 93D. Spliced fibers 94 extend through opposing first volume 133 to egress from the apparatus 100, such as through egress openings 135.

Referring to FIGS. 8-20, a reference coordinate axis is provided, in which a vertical direction VV, a transverse direction TT, and a longitudinal direction LL extend in mutually orthogonal relationship. In various embodiments, the closure 300 is configured to receive a cable along the vertical direction VV through the second end opening 304 and into the interior volume 308. Fiber optic leads extend from the cable at the interior volume 308 and from the closure 300 through the first end opening 302, such as routing substantially along the vertical direction VV. Sidewalls 312 extend substantially along the direction of the extension of the cable, such as substantially along the vertical direction VV. Sidewalls 312 furthermore extend along the transverse direction TT and separated from one another along the longitudinal direction LL. Openings 302, 304 are separated from one another along the vertical direction VV. Fiber guide arms 342 extend along the transverse direction TT, such as may provide depth to the channel 344. Additionally, fiber guide arms 342 extend along the vertical direction VV, such as to extend the channel 344 from the first end opening 302 toward the interior volume 308. Gap 346 may extend substantially along the longitudinal direction LL, or additionally, along an acute angle between the longitudinal direction LL and the vertical direction VV. The cable routing passage 355 extends substantially along the vertical direction VV, such as from the second end opening 304 toward the interior volume 308. The interior volume 308 is formed along the vertical direction VV between the end openings 302, 304, and between the base wall 318 and cover wall 322 along the transverse direction TT, and between the sidewalls 312 along the longitudinal direction LL.

In various embodiments, reference coordinate axis including directions VV, TT, LL described in regard to the closure 300 may correspond to a vertical direction V, a transverse direction T, and a longitudinal direction L, respectively, at the frame 100 (FIGS. 1-7).

Embodiments of the apparatus 100 may permit the frame 110 to form a splice frame configured to mount directly onto a floor mount at a datacenter. The frame 110 or top wall 112 may include an attachment interface 116 forming a hook or hanger for transporting (e.g., hoisting) the apparatus 100 into and through the datacenter. Ribs 139, 140 at the door 138 may strengthen the apparatus 100, such as may facilitate transportation and usage of the apparatus 100. Splice cassettes 200 positioned in vertical orientation may facilitate cable management, such as may permit an incoming cable to flow in from the top or bottom of the cassette 200, such as at opening 212.

Embodiments of the closure 300 forming a breakout kit may facilitate ease of access to the internal volume 308 for cable management, such as facilitating access through the fastener 326 forming a captive screw, or the cover 320 forming a sliding door. The breakout kit cover 320 can be easily removed either with the closure 300 on a table or mounted on the apparatus 100 (e.g., at frame 110), such as with a single a hand by the user without requiring a tool. Cover 320 further provides areas for cable labeling proximate to egress locations, such as proximate to the first end opening 302.

Embodiments of the apparatus 100 and closure 300 provided herein may include promote routing an ultra-high fiber count (UHFC) cable including 144 fibers or more, such as 864 fibers, or 1728 fibers, or 3456 fibers, or 6912 fibers, per closure 300. Embodiments of the closure 300 may permit breakout of cables entering the closure 300 and protection and management of fibers extending from the cable and egressing the closure through channels 344 formed at fiber guides 342.

Additional aspects of the subject matter are provided in one or more of the following clauses:

1. A cable breakout closure 300 including a body 310 having a first end opening 302, a second end opening 304 distal to the first end opening 302, and an interior volume 308 formed between the first end opening 302 and the second end opening 304, wherein the body 310 includes a pair of sidewalls 312 separated from one another and a base wall 318 extending to the sidewalls 312, wherein the sidewalls 312 include a channel 325 extending substantially co-directional to a direction of extension of the sidewalls 312; a fiber guide module 340 including a plurality of fiber guide arms 342, the fiber guide module 340 positioned proximate to the first end opening 302, wherein the fiber guide arms 342 form a fiber guide channel 344 extending substantially co-directional to a direction of separation of the first end opening 302 from the second end opening 304; a cable mount module 350 forming a cable routing passage 355 extending from the second end opening 304 to the interior volume 308; a cap 360 attachable to the cable mount module 350 and forming a cover over the cable routing passage 355; and a cover 320 including a cover wall 322 and a guide rail 324, wherein the guide rail 324 is receivable at the channel 325 at the body 310, and wherein the body 310 includes a springing mechanism 313 configured to apply a force to the cover wall 322 to retain the cover 320 within the channel 325 at the body 310.

2. The cable breakout closure 300 of any one or more clauses herein, wherein the springing mechanism 313 includes a spring plunger positioned at a top wall 314 at the body 310, wherein the spring plunger is configured to apply the force to a face of the cover wall 322 at which the cover 320 abuts the body 310.

3. The cable breakout closure 300 of any one or more clauses herein, wherein the cover 320 includes a fastener 326 forming a captive screw configured to be received at a fastener interface 316 at a top wall 314 of the body 310.

4. The cable breakout closure 300 of any one or more clauses herein, wherein the channel 325 at the body 310 includes a detent 319 at the first end opening 302 and an open end 321 at the second end opening 304, the open end 321 configured to receive the guide rail 324 at the cover 320 along the direction of extension of the sidewalls 312.

5. The cable breakout closure 300 of any one or more clauses herein, wherein the cable mount module 350 includes an attachment surface 356 configured to retain a cable at the cable mount module 350.

6. The cable breakout closure 300 of any one or more clauses herein, wherein the attachment surface 356 includes bumps, protrusions, or spikes configured to grip onto the cable at the cable routing passage 355.

7. The cable breakout closure 300 of any one or more clauses herein, wherein the attachment surface 356 includes rows of bumps, protrusions, or spikes positioned in adjacent arrangement along a direction of extension of the cable routing passage 355 from the second end opening 304 to the interior volume 308.

8. The cable breakout closure 300 of any one or more clauses herein, wherein the cable mount module 350 includes a groove 352 extending from a platform wall 354, wherein the cable routing passage 355 extends along the groove 352 from the second end opening 304 toward the interior volume 308.

9. The cable breakout closure 300 of any one or more clauses herein, wherein the cover 320 includes a rail channel 325 configured to receive an attachment interface 315 forming a pin attached to the sidewall 312.

10. The cable breakout closure 300 of any one or more clauses herein, wherein the body 310 includes a unitary, monolithic component including the sidewalls 312, the base wall 318, and the top wall 314.

11. The cable breakout closure 300 of any one or more clauses herein, wherein the body 310 includes the unitary, monolithic component having a polymer material or a metallic material.

12. The cable breakout closure 300 of any one or more clauses herein, wherein the body 310 includes a sheet metal material including the sidewalls 312, the base wall 318, and the top wall 314, and wherein a fastener interface 317 extends through the sidewalls 312 to receive a fastener to attach the fiber guide module 340 at the first end opening 302, and wherein the base wall 318 includes a fastener interface 359 to attach the cable mount module 350 at the second end opening 304.

13. An apparatus 100 for telecommunications equipment mounting, the apparatus 100 including a frame 110 including a pair of exterior sidewalls 128 and a pair or more of interior sidewalls 124, wherein a first volume 133 is formed between the exterior sidewall 128 and the interior sidewall 124, and wherein a second volume 230 is formed between the interior sidewall 124 and a base wall 132 extending between the pair of interior sidewalls 124, wherein a routing opening 136 extends through the interior sidewalls 124 to permit routing through the first volume 133 to the second volume 230; a top wall 112 positioned atop the frame 110, wherein the top wall 112 includes a cable entry opening 134 permitting routing to the first volume 133, wherein the top wall 112 includes a cable egress opening 135 permitting routing from an opposing first volume 133; the cable breakout closure 300 of any one or more clauses herein disposable at a closure mount location 131 at the first volume 133.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A cable breakout closure (300), comprising:
a body (310) comprising a first end opening (302), a second end opening (304) distal to the first end opening (302), and an interior volume (308) formed between the first end opening (302) and the second end opening (304), wherein the body (310) comprises a pair of sidewalls (312) separated from one another and a base wall (318) extending to the sidewalls (312), wherein the sidewalls (312) comprise a channel (325) extending substantially co-directional to a direction of extension of the sidewalls (312);
a fiber guide module (340) comprising a plurality of fiber guide arms (342), the fiber guide module (340) positioned proximate to the first end opening (302), wherein the fiber guide arms (342) form a fiber guide channel (344) extending substantially co-directional to a direction of separation of the first end opening (302) from the second end opening (304);
a cable mount module (350) comprising a cable routing passage (355) extending from the second end opening (304) to the interior volume (308);
a cap (360) attachable to the cable mount module (350) and forming a cover over the cable routing passage (355); and
a cover (320) comprising a cover wall (322) and a guide rail (324), wherein the guide rail (324) is receivable at the channel (325) at the body (210), and wherein the body (310) comprises a springing mechanism (313) configured to apply a force to the cover wall (322) to retain the cover (320) within the channel (325) at the body (310).

2. A cable breakout closure (300) according to claim 1, wherein the springing mechanism (313) comprises a spring plunger positioned at a top wall (314) at the body (310), wherein the spring plunger is configured to apply the force to a face of the cover wall (322) at which the cover (320) abuts the body (310).

3. A cable breakout closure (300) according to claim 1 or claim 2, wherein the cover (320) comprises a fastener (326) forming a captive screw configured to be received at a fastener interface (316) at a top wall (314) of the body (310).

4. A cable breakout closure (300) according to any preceding claim, wherein the channel (325) at the body (310) comprises a detent (319) at the first end opening (302) and an open end (321) at the second end opening (304), the open end (321) configured to receive the guide rail (324) at the cover (320) along the direction of extension of the sidewalls (312).

5. A cable breakout closure (300) according to any preceding claim, wherein the cable mount module (350) comprises an attachment surface (356) configured to retain a cable at the cable mount module (350).

6. A cable breakout closure (300) according to claim 5, wherein the attachment surface (356) comprises bumps, protrusions, or spikes configured to grip onto the cable at the cable routing passage (355).

7. A cable breakout closure (300) according to claim 5 or claim 6, wherein the attachment surface (356) comprises rows of bumps, protrusions, or spikes positioned in adjacent arrangement along a direction of extension of the cable routing passage (355) from the second end opening (304) to the interior volume (308).

8. A cable breakout closure (300) according to any preceding claim, wherein the cable mount module (350) comprises a groove (352) extending from a platform wall (354), wherein the cable routing passage (350) extends along the groove (352) from the second end opening (304) toward the interior volume (308).

9. A cable breakout closure (300) according to any preceding claim, wherein the body (310) comprises a unitary, monolithic component comprising the sidewalls (312), the base wall (318), and a top wall (314).

10. A cable breakout closure (300) according to claim 9, wherein the body (310) comprises a polymer material or a metallic material.

11. A cable breakout closure (300) according to any preceding claim, wherein the body (310) comprises a sheet metal material comprising the sidewalls (312), the base wall (318), and a top wall (314), wherein the base wall (318) comprises a fastener interface (359) to attach the cable mount module (340) at the second end opening (304).

12. A cable breakout closure (300), comprising:
a body (310) comprising a first end opening (302), a second end opening (304) distal to the first end opening (302), and an interior volume (308) formed between the first end opening (302) and the second end opening (304), wherein the body (310) comprises a pair of sidewalls (312) separated from one another and a base wall (318) extending to the sidewalls (312);
a fiber guide module (340) comprising a plurality of fiber guide arms (342), the fiber guide module (340) positioned proximate to the first end opening (302), wherein the fiber guide arms (342) form a fiber guide channel (344) extending substantially co-directional to a direction of separation of the first end opening (302) from the second end opening (304);
a cable mount module (350) comprising a cable routing passage (355) extending from the second end opening (304) to the interior volume (308);
a cap (360) attachable to the cable mount module (350) and forming a cover over the cable routing passage (355); and
a cover (320) comprising a cover wall (322) and a guide rail (324), wherein the guide rail (324) comprises a rail channel (325) configured to receive an attachment interface (315) forming a pin attached to the sidewall (312).

13. A cable breakout closure (300) according to claim 12, wherein a fastener interface (317) extends through the sidewall (312) to receive a fastener to attach the fiber guide module (340) at the first end opening (302).

14. A cable breakout closure (300) according to claim 12 or claim 13, wherein the cover (320) comprises a fastener (326) forming a captive screw configured to be received at a fastener interface (316) at a top wall (314) of the body (310).

15. An apparatus (100) for telecommunications equipment mounting, the apparatus (100) comprising:
a frame (110) comprising a pair of exterior sidewalls (128) and a pair or more of interior sidewalls (124), wherein a first volume (133) is formed between the exterior sidewall (128) and the interior sidewall (124), and wherein a second volume (230) is formed between the interior sidewall (124) and a base wall (132) extending between the pair of interior sidewalls (124), wherein a routing opening (136) extends through the interior sidewalls (124) to permit routing through the first volume (133) to the second volume (230);
a top wall (112) positioned atop the frame (110), wherein the top wall (112) comprises a cable entry opening (134) permitting routing to the first volume (133), wherein the top wall (112) comprises a cable egress opening (135) permitting routing from an opposing first volume (133);
a cable breakout closure (300) according to any preceding claim disposable at a closure mount location (131) at the first volume (133).
